# EUROPEAN PATENT APPLICATION

(11) **EP 4 393 808 A1**
(43) Date of publication of application: **03.07.2024**
(21) Application number: 22315356.0
(22) Date of filing: 28.12.2022
(51) Int. Cl.: B63B 21/20, B63B 21/26, B63B 21/50

(54) **MOORING SYSTEM FOR FLOATING STRUCTURE AND INSTALLATION METHOD**

(71) Applicant: TotalEnergies OneTech, 92400 Courbevoie (FR)
(72) Inventor: Barrier, Philippe, 92400 Courbevoie (FR); Le-Guennec, Stéphane, 92400 Courbevoie (FR)
(74) Representative: Innovincia

(57) **Abstract**

The present invention relates to a mooring system (5) for a floating structure (3), preferably a floating wind turbine platform, wherein the mooring system (5) comprises at least one mooring line (51) made of a synthetic material and without any chain section.

## Description

### TECHNICAL FIELD:

The present invention relates to a floating structure for example for an offshore wind turbine. More precisely, the present invention relates to the subsea mooring of a floating structure on the seabed.

### BACKGROUND:

For the installation of an offshore wind unit, comprising a turbine and a support linked to the seabed, it is well known to use support structures, like jacket structures. Such a support structure rests on the seabed and is fixed to the ground with anchor devices. The support structure extends above the sea level to receive a wind turbine mast. Generally, this support structure is made of one piece and the greater the depth is, the higher the support structure must be. However, this solution is expensive.

Another solution to install an offshore wind unit is to use a floating structure moored to the seabed with mooring lines. This solution requires the use of a floating technology. Then, the floating offshore wind unit can be subdivided as follow:
- a floating structure designed to support for example a turbine, corresponding to a rotor nacelle assembly (RNA), comprising blades, hub and nacelle and the tower, or to support some other element like an electrical substation;
- a station keeping system, corresponding to mooring lines and anchors allowing the system to remain in place.

The mooring lines are commonly made of steel chain and a length of synthetic material, for example polyester. This type of mooring line requires additional effort at installation when standard procedures are followed. The chains have been proved to be very fatigue sensitive in floating offshore wind farm domain due to the high repeatability of large tension cycles induced by the floating structure motions added to the external loads, for example as the wind turbine thrust force, that need to be restored by the mooring system. These external loads and constraints get bigger when the size of the floating structure and the wind turbine is getting bigger and its rate is increasing. Consequently, it is observed that mooring chain diameters are continuously increasing with increased wind turbine power, up to the limit of supply chain capacities. These large chain diameters induce a significant cost increase, limit the supply chain and complexify the mooring line installation. In addition, feedbacks from existing floating structure, for example in the oil and gas domain, show that chains are the main contributor (approx. 50%) of mooring line failures.

Besides, it is often found beneficial to have a more or less long segment of synthetic material, for example in polyester, inserted in a mooring line assembly. This material is used on many floating offshore wind farms due to its advantageous characteristics: light linear weight, high strength, good fatigue resistance, compliant stiffness (EA relatively low compared to standard steel mooring components). Besides, from an economical point of view, synthetic materials are less expensive to produce and then cost-effective compared to steel materials, which make them even more adapted to the floating offshore wind turbine domain.

However, synthetic materials such as polyester have a visco-elasto-plastic behaviour that induces some changes of its stiffness and elongation properties over time depending on previous loadings. These changes can be more or less reversible depending on time where the rope is left with no tension (ie time left to let the recovering process to happen).

Regarding synthetic material, a known solution to deal with this issue is to perform a pre-stretching operation during mooring line installation. This operation consists in applying a load in the mooring line thanks to the installation vessel in order to stretch the synthetic material of the mooring line assembly. Doing so, the high load that will be for example observed during storm, should not lead to an additional permanent elongation of the rope, or at least reduce this elongation down to an acceptable level.

However, to be beneficial, this pre-stretching operation must be done ensuring that tension will be maintained in the rope. Else, the rope will contract and lose the benefits from the pre-stretch operation. Practically, maintaining the tension in the mooring line after pre-stretching operation will be not possible in the floating offshore wind turbine domain as the operation will be performed remotely from the floating structure before hooking up the mooring line to the floating structure.

Besides, looking at commercial wind farms typically made of twenty or thirty floating structures to install with three to six mooring lines per unit would lead to sixty to one hundred eighty pre-stretching operations to be performed. This would increase significantly the mobilization time of the marine spread impacting the project costs.

One aim of the present invention is to provide an enhanced and cheap mooring system for an offshore wind turbine comprising synthetic mooring lines.

To this end, the invention relates to a mooring system for a floating structure, preferably a floating wind turbine platform, wherein the mooring system comprises at least one mooring line made of a synthetic material and without any chain section.

The mooring line could comprise an abrasion resistant section connected to an anchor.

The anchor could be buried under the seabed.

The mooring system could comprise at least one mooring line made of a synthetic material directly connected to an anchor.

The anchor could be protruding from the seabed.

The anchor could be buried under the seabed, the mooring line could comprise a protected section connected to the anchor.

The present invention also concerns an installation method of a floating structure, said method comprising a step of installation of at least one mooring line made of a synthetic material, the length of the synthetic material mooring line being 1 to 4% shorter, at equal tension, than a calculated design length of the synthetic material mooring line suitable for the floating structure at its implantation site.

According to the installation method, after a passive pre-stretching period, the length of the synthetic material mooring line stretches out to the calculated design length of the synthetic material mooring line suitable for the floating structure at its implantation site.

According to the installation method, after a passive pre-stretching period, the quasi-static stiffness of the synthetic material of the mooring line could increase between 10% to 100%.

According to the installation method, the installation step of at least one mooring line made of a synthetic material could comprise:
- a first step of connecting the bottom part of the mooring line to its anchor at the seabed),
- a second step of towing the floating structure on site, and
- a third step of hooking up of the mooring line to the floating structure.

According to the installation method, the mooring line could comprise at least one buoyant segment or is linked to at least one submerged buoy at least between the first and third steps.

Further features and advantages of the invention will become apparent from the following description, given by way of non-limiting example, with reference to the appended drawings, in which:
- Figure 1 is a side view of a schematic representation of an offshore wind farm of wind turbines with one mooring line according to a first embodiment,
- Figure 2 is a side view of a schematic representation of an offshore wind farm of wind turbines with one mooring line according to a second embodiment,
- Figure 3 is a side view of a schematic representation of an offshore wind farm of wind turbines with one mooring line according to a third embodiment.

In these figures, identical elements bear the same reference numbers. The following implementations are examples. Although the description refers to one or more embodiments, this does not necessarily mean that each reference relates to the same embodiment or that the features apply only to a single embodiment. Individual features of different embodiments can also be combined or interchanged to provide other embodiments.

### DETAILED DESCRIPTION

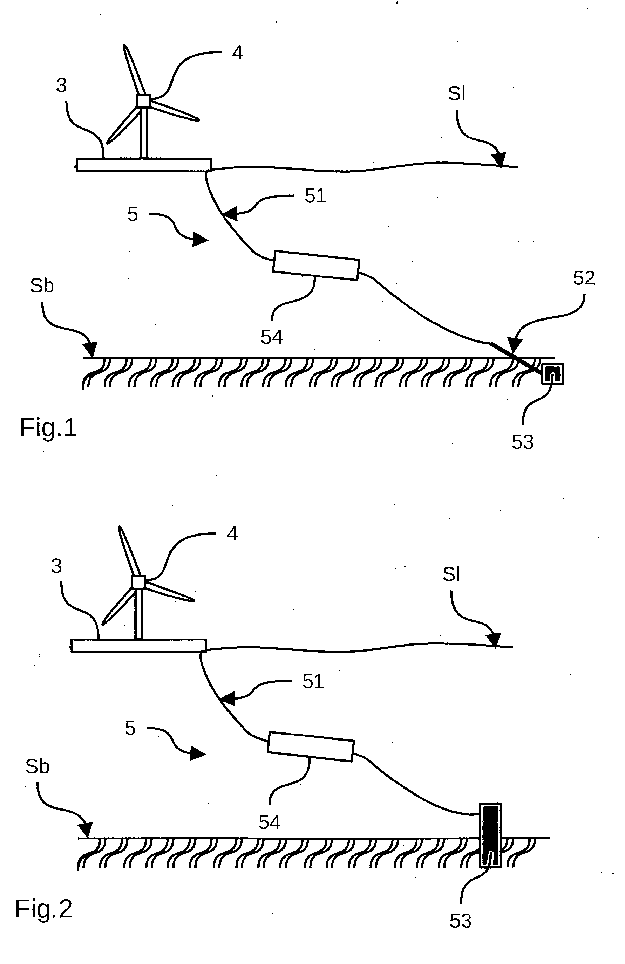

Figure 1 to 3 show a floating structure 3, for example a floating wind turbine platform designed to receive a wind turbine 4 and to float above the sea level SI. The floating structure 3 is moored to the seabed Sb by a mooring system 5.

The mooring system 5 comprises at least one mooring line 51 made of a synthetic material and without any chain section. By chain section, shall be understood as a segment of two or more chains links made of steel.

In a first embodiment shown in figure 1, the mooring line 51 is made of a synthetic material and have an abrasion resistant section 52. This abrasion resistant section 52is connected to an anchor 53 mooring the floating structure 3 to the seabed Sb. This abrasion resistant section 52can be, for example, the last 5% maximum of the length of the mooring line 51. In this first embodiment, the mooring line 51 comprises only a section made of a synthetic material and an abrasion resistant section 52. This abrasion resistant section 52 could be for example a metallic cable or a rope section made of High Modulus Polyethylene.

The anchor 53 is for example buried under the seabed Sb. The abrasion resistant section 52of the mooring line 51 allows the connection of the mooring line 51 to this buried anchor 53 without the synthetic material being buried into the seabed Sb. Indeed, the synthetic material is sensitive to abrasion and can be deteriorate with the frictions with the sediments and the seabed Sb.

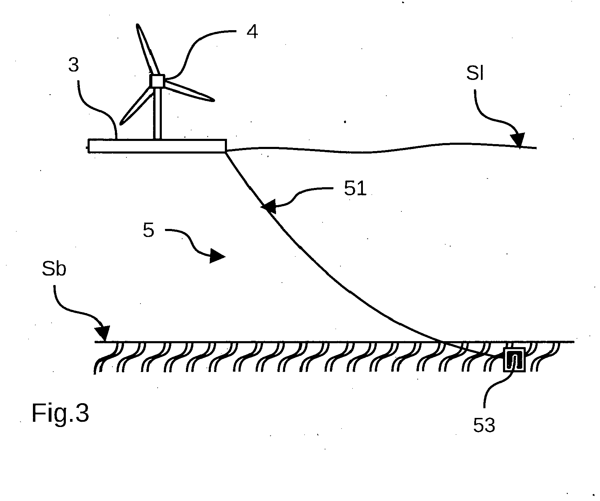

In a second embodiment shown in figures 2 and 3, the mooring line 51 is made of a synthetic material directly connected to an anchor 53. By directly connected to the anchor 53, we mean that, contrary to the first embodiment, the mooring line 51 does not have an abrasion resistant section 52.

According to a first variant of the second embodiment, illustrated in figure 2, the anchor 53 is protruding from the seabed Sb. To avoid any contact of the synthetic material of the mooring line 51, said mooring line 51 can comprise at least one buoyant segment 54 or can be linked to at least one submerged buoy.

The mooring line 51 can comprise at least one protected section to protect the synthetic material from the friction with the sediments and the seabed Sb. This at least one protected section can be any section of the mooring line 51 which is likely to be in contact with the sediments and the seabed Sb or buried in them. This at least one section of the mooring line 51 can be coated with a protective layer or be inserted into a sleeve. It is particularly important as illustrated in a second variant in figure 3 when the anchor 53 is buried under the seabed Sb. Then, the section of the mooring line 51 connected to the anchor 53, and at least partially buried, can be a protected section.

The synthetic material of the mooring line 51 could be chosen for example between polyester or a polyamide like the nylon.

The end of the mooring line 51 hooked up to the floating structure 3 could comprise a short metallic section (not represented), made of a metallic cable or a rope section made of High Modulus Polyethylene.

This mooring line 51 without any chain section is a cheaper mooring line than a mooring line comprising a chain section. Indeed, as the size of the floating structure 3 and the wind turbine 4 increases, the size of the chain links also increases and the costs also increase. The installation of the floating structure 3 and an entire offshore wind farm is made easier thanks to the synthetic mooring lines 51 that are lighter and easier to manipulate than chains, thus reducing the requirements in terms of installation vessels capacity. Ships and vessels needed for the installation are them smaller and cheaper.

The present invention also concerns an installation method of a floating structure 3. This, method comprises a step of installation of at least one mooring line 51 made of a synthetic material. At installation, the length of the synthetic material mooring line 51 is 1 to 4% shorter, at equal tension, than a calculated design length of a synthetic material mooring line suitable for the floating structure 3 at its implantation site.

The calculated design length corresponds to the mooring line length resulting from a standard mooring design. Standard mooring design consists in adjusting the mooring line length and strength to ensure that maximum floater offsets remain within allowable limits (typically inferior to 50% of the water depth in shallow waters, ie below 100m water depth), with maximum mooring line tension typically below 60% of the minimum breaking load under extreme event (typically 50-year return period storm).

As described above in the different embodiments, the mooring line 51 is made of a synthetic material and without any chain section.

Due to this shorter length, at installation compared to the calculated design length, the mooring line 51 experiences higher tensions, when connected to the anchor 53 and the floating structure 3. This increase of the tension of the mooring line 51 during the installation allows avoiding an active pre-stretching of the mooring line 51. Then, it is no longer required to use dedicated vessels to perform the pre-stretching operation or to equip the floating structure 3 with high-capacity tensioning means. The installation of the floating structure 3, and consequently the installation of an entire offshore wind farm is cheaper and easier.

The pre-stretching operation of the mooring line 51 is perform passively during the first weeks or months when the offshore wind turbine is in production and exposed to environmental loads. The wind, the swell and yearly storms generate large tensions in the mooring lines 51, stretching the mooring line similarly to an active pre-stretching operation. As opposed to an active pre-stretching which consists in using high pulling capacity marine spread to over tension the synthetic line during the installation sequence (common practice in the industry is 40% of the minimum breaking load), the passive pre-stretching relies on the environmental loadings (wave, wind, current) to perform this high tensioning of the synthetic line resulting in additional permanent elongation.

The present invention consists in installing the line with on purpose shorter synthetic mooring line length (1% to 4% as mentioned previously) to anticipate the future elongation of the rope that will happen shortly after the installation due to environmental loading thus reaching the "nominal" or "calculated design" rope length.

For example, for a floating structure 3 moored between 70 and 100m deep with some mooring lines 51 of polyester; to reach a nominal tension between 3% and 10% of the minimum breaking, the tension during the installation can be between 12% and 20% of the minimum breaking limit of the mooring line 51. After the passive pre-stretching period, the tension of the mooring line 51 will reach the afore mentioned targeted nominal tension.

The pre-stretching also affects the quasi-static stiffness of the synthetic material of the mooring line 51. By quasi-static stiffness we mean the stiffness of the mooring line 51 when it is loaded slowly, leaving time for both the amorphous and crystalline parts of the synthetic material to react to the load. The resulting fiber stiffness is an average of the stiffness of both amorphous and crystalline parts.

After the passive pre-stretching period, the length of the synthetic material mooring line 51 (initially 1% to 4% shorter than calculated design length) stretches out to the calculated design length of the synthetic material mooring line suitable for the floating structure 3 at its implantation site.

After the passive pre-stretching period, the quasi-static stiffness of the synthetic material of the mooring line 51 could increase between 10% to 100%. For a polyamide mooring line 51, like nylon, the increase of the quasi-static stiffness could be between 10% and 50%. For a polyester mooring line 51 the increase of the quasi-static stiffness could be between 30% and 100%.

The installation step of the at least one mooring line 51 made of a synthetic material may comprise:
- a first step of connecting the bottom part of the mooring line 51 to its anchor 53 at the seabed Sb,
- a second step of towing the floating structure 3 on site, and
- a third step of hooking up the mooring line 51 to the floating structure 3.

During the first steps, the mooring lines 51 are generally connected to an anchor 53. This anchor 53 could be pre-installed on the seabed Sb or installed during this first step with the mooring line 51 already connected. When the exact location of the anchor 53 is known, especially for a dragged anchor, at installation, the length of the mooring line can be adjusted so that the synthetic material mooring line 51 is 1 to 4% shorter, at equal tension, than a calculated design length of a synthetic material mooring line suitable for the floating structure 3 at its implantation site.

During the second step the floating structure 3 is towed on site by known means, for example on a barge or towed on site.

During the third step, the mooring lines 51 are generally lift and pulled in order to be hooked up to the floating structure 3. During this third step, due to their shorter length at installation compared to the calculated design length, the mooring lines 51 will experience higher tensions, like described above.

Between the first step of connecting the bottom part of the mooring line 51 to its anchor 53 at the seabed Sb and the third step of hooking up of the mooring line 51 to the floating structure 3, at least one buoyant segment 54 may be installed on the mooring line 51 in order to avoid any contact of the synthetic material with the sediments and the seabed.

## Claims

1. Mooring system (5) for a floating structure (3), preferably a floating wind turbine platform,
wherein the mooring system (5) comprises at least one mooring line (51) made of a synthetic material and without any chain section.

2. Mooring system (5) according to the preceding claim, wherein the mooring line (51) comprises an abrasion resistant section (52) connected to an anchor (53).

3. Mooring system (5) according to claim 2, wherein the anchor (53) is buried under the seabed (Sb).

4. Mooring system (5) for a floating structure (3), preferably a floating wind turbine platform,
wherein the mooring system (5) comprises at least one mooring line (51) made of a synthetic material directly connected to an anchor (53).

5. Mooring system (5) according to claim 4, wherein the anchor (53) is protruding from the seabed (Sb).

6. Mooring system (5) according to claim 4, wherein the anchor (53) is buried under the seabed (Sb), the mooring line (51) comprising a protected section connected to the anchor (53).

7. Installation method of a floating structure (3), said method comprising a step of installation of at least one mooring line (51) made of a synthetic material, the length of the synthetic material mooring line (51) being 1 to 4% shorter, at equal tension, than a calculated design length of the synthetic material mooring line suitable for the floating structure (3) at its implantation site.

8. Installation method according to the preceding claim, wherein, after a passive pre-stretching period, the length of the synthetic material mooring line (51) stretches out to the calculated design length of the synthetic material mooring line suitable for the floating structure (3) at its implantation site.

9. Installation method according to any one of claims 7 or 8, wherein after a passive pre-stretching period, the quasi-static stiffness of the synthetic material of the mooring line (51) increases between 10% to 100%.

10. Installation method according to any one of claims7 to 9, wherein the installation step of at least one mooring line (51) made of a synthetic material comprises:
• a first step of connecting the bottom part of the mooring line (51) to its anchor (53) at the seabed (Sb),
• a second step of towing the floating structure (3) on site, and
• a third step of hooking up of the mooring line (51) to the floating structure (3) to.

11. Installation method according to the preceding claim, wherein the mooring line (51) comprises at least one buoyant segment (54) or is linked to at least one submerged buoy at least between the first and third steps.
